# EUROPEAN PATENT APPLICATION

(11) **EP 4 397 894 A1**
(43) Date of publication of application: **10.07.2024**
(21) Application number: 22863420.0
(22) Date of filing: 30.08.2022
(51) Int. Cl.: F16K 11/085

(54) **FLUID CONTROL ASSEMBLY AND FLUID CONTROL DEVICE**

(30) Priority: 30.08.2021 CN 202111005738
(71) Applicant: Zhejiang Sanhua Automotive Components Co., Ltd., Hangzhou, Zhejiang 310018 (CN)
(72) Inventor: WANG, Lixin, Hangzhou, Zhejiang 310018 (CN); CHI, Jianhua, Hangzhou, Zhejiang 310018 (CN); WANG, Yun, Hangzhou, Zhejiang 310018 (CN); LIN, Long, Hangzhou, Zhejiang 310018 (CN); ZHU, Haijun, Hangzhou, Zhejiang 310018 (CN)
(74) Representative: Epping - Hermann - Fischer
(86) International application number: PCT/CN2022/115675
(87) International publication number: WO 2023/030285

(57) **Abstract**

A fluid control assembly (1) and a fluid control device (1000). The fluid control assembly (1) is provided with an accommodation chamber (101) and a communication port (102), the communication port (102) being adjacent to the accommodation chamber (101). The fluid control assembly (1) comprises a connector (10), a valve core (20) and a sealing member (30). The connector (10) comprises a side wall portion (11), the side wall portion (11) forming at least part of the peripheral wall of the accommodation chamber (101); at least part of the valve core (20) is positioned in the accommodation chamber (101); the sealing member (30) comprises a sealing body portion, the sealing body portion being clamped between the side wall portion (11) and the valve core (20); and the sealing member (30) comprises pore channels (31) correspondingly communicating with the communication port (102). In the axial direction of the valve core (20), orthographic projections of the pore channels (31) of the sealing member (30) are arranged at intervals in the circumferential direction of the valve core (20); and the pore channels (31) comprise a first pore channel (32) and a second pore channel (33), wherein the first pore channel (32) and the second pore channel (33) are arranged at an interval in the axial direction of the valve core (20). By means of the configuration of the fluid control assembly (1) and the fluid control device (1000), the sealing performance thereof can be improved.

## Description

This application claims priority to Chinese Patent Application No. 202111005738.3, titled "FLUID CONTROL ASSEMBLY AND FLUID CONTROL DEVICE ", filed on August 30, 2021 with the China National Intellectual Property Administration, which is incorporated herein by reference in its entirety.

### FIELD

The present application relates to the fluid control technology and in particular to a fluid control assembly and fluid control device.

### BACKGROUND

A thermal management system requires a fluid control assembly to realize fluid control of multiple flow paths. The fluid control assembly comprises a connecting member, a valve core and a seal. The seal comprises a pore passage connected to a communication hole located on the connecting member. The seal is located between the connecting member and the valve core. How to design the fluid control assembly to improve a sealing performance of the fluid control assembly is an urgent problem that needs to be solved.

### SUMMARY

The purpose of the present application is to provide a fluid control assembly and a fluid control device, which are beneficial for improving a sealing performance of the fluid control assembly.

On the one hand, an embodiment of the present application provides a fluid control assembly with an accommodation chamber and a communication port. The fluid control assembly comprises a connecting member, a valve core, and a seal. The connecting member comprises a side wall portion, which forms at least part of a peripheral wall of the accommodation chamber, the communication port is located in the side wall portion, and at least part of the valve core is located in the accommodation chamber. At least part of the seal in a radial direction of the accommodation chamber is located between the side wall portion and the valve core, the seal comprises pore passages corresponding to the communication port; where the orthographic projections of all the pore passages in the seal in an axial direction of the seal are arranged at intervals in a circumferential direction of the valve core. The pore passages comprise a first pore passage and a second pore passage. The first pore passage and the second pore passage are spaced apart in the axial direction of the seal.

On the other hand, an embodiment of the present application provides a fluid control device, comprising a fluid management assembly and at least one fluid control assembly according to any one of the above embodiments, the fluid control assembly has a flow passage, and a port of the fluid management assembly is in communication with the flow passage.

The fluid control assembly and the fluid control device according to the embodiments of the present application comprise a connecting member, a valve core and a seal. At least part of the seal is sandwiched between the side wall portion of the connecting member and the valve core. The seal comprises pore passages in communication with the communication ports of the fluid control assembly, which enable fluid to flow to the communication ports through the pore passages. The orthographic projections of the pore passages of the seal in the axial direction of the seal are arranged at intervals in the circumferential direction of the valve core. The pore passages comprise the first pore passage and the second pore passage. The first pore passage and the second pore passage are spaced apart in the axial direction of the seal. In that case, the first pore passage and the second pore passage are located at different levels of the seal. Compared with the case of arranging all the pore passages at intervals in the circumferential direction of the valve core and arranging all the pore passages at the same level of the seal, the seal of the flow control device provided by the embodiment of the present application can increase a length of a wall portion between two pore passages located at the same level, which is beneficial for improving a sealing performance of the fluid control assembly.

### BRIEF DESCRIPTION OF THE DRAWINGS

Figure 1 is an exploded structural view of a fluid control assembly according to an embodiment of the present application;
Figure 2 is a schematic three-dimensional structural view of the fluid control assembly shown in Figure 1;
Figure 3 is a schematic three-dimensional structural view of a connecting member according to an embodiment of the present application;
Figure 4 is a schematic front structural view of the fluid control assembly shown in Figure 2;
Figure 5 is a schematic cross-sectional structural view in a A-A direction in Figure 4;
Figure 6 is a schematic cross-sectional structural view of the connecting member shown in Figure 3 at one position;
Figure 7 is a schematic cross-sectional structural view in a B-B direction in Figure 4;
Figure 8 is a schematic cross-sectional structural view of the connecting member shown in Figure 3 at another position;
Figure 9 is a schematic structural view of a seal according to an embodiment of the present application;
Figure 10 is a schematic front structural view of the seal shown in Figure 9;
Figure 11 is a schematic structural view in a C-C direction in Figure 10;
Figure 12 is a schematic structural view in a D-D direction in Figure 10;
Figure 13 is an orthographic view of each pore passage of the seal in Figure 10 in the axial direction of the seal;
Figure 14 is a schematic three-dimensional structural view of a valve core according to an embodiment of the present application;
Figure 15 is a schematic front structural view of the valve core shown in Figure 14;
Figure 16 is a schematic structural view in a E-E direction in Figure 15;
Figure 17 is a schematic structural view in a F-F direction in Figure 15;
Figure 18 is a schematic cross-sectional structural view of the valve core shown in Figure 14 at one of its positions;
Figure 19 is a schematic structural view of a conduction mode of each communication port when the fluid control assembly shown in Figure 2 is in a first operation position;
Figure 20 is a schematic structural view of the conduction mode of each communication port when the fluid control assembly shown in Figure 2 is in a second operation position;
Figure 21 is a schematic structural view of the conduction mode of each communication port when the fluid control assembly shown in Figure 2 is in a third operation position;
Figure 22 is a schematic structural view of the conduction mode of each communication port when the fluid control assembly shown in Figure 2 is in a fourth operation position;
Figure 23 is a schematic structural view of a fluid control device according to an embodiment of the present application;

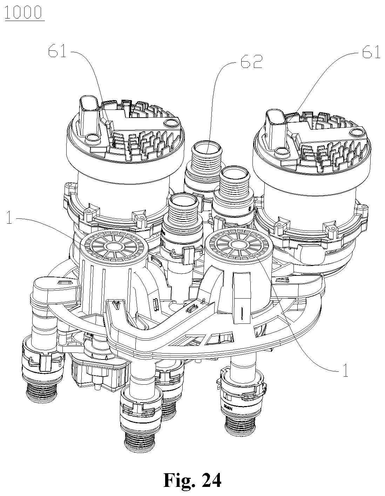

Figure 24 is a schematic structural view of a fluid control device according to another embodiment of the present application.

### DETAILED DESCRIPTION OF EMBODIMENTS

Features and exemplary embodiments of various aspects of the present application will be described in detail below. In order to make the purpose, technical solutions, and advantages of the present application clearer, the present application will be further described below in conjunction with the accompanying drawings and specific embodiments. As used herein, relational terms such as "first" and "second" are merely configured to distinguish one component from another component having the same name and do not necessarily require or imply any actual relationship or sequence between these components.

An embodiment of the present application provides a fluid control assembly that can be applied to a vehicle thermal management system, specifically a coolant circulation system, and can perform flow path conduction and switching functions for the thermal management system.

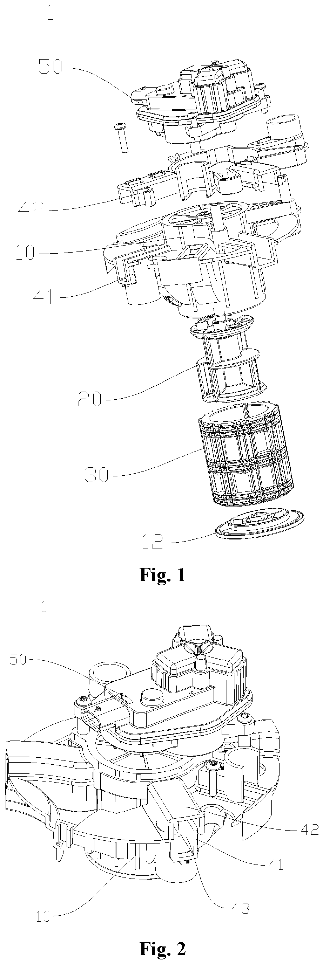

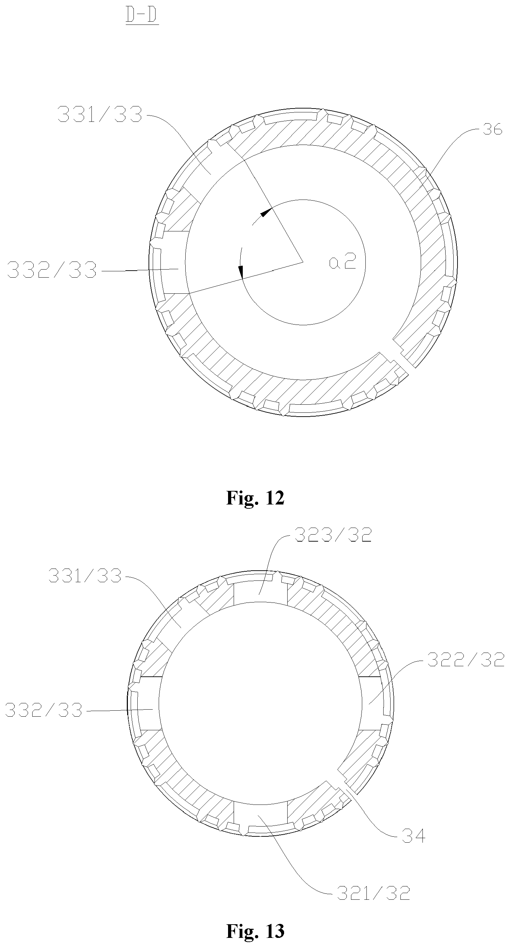

As shown in Figures 1 to 13, a fluid control assembly 1 comprises a connecting member 10, a valve core 20 and a seal 30. The fluid control assembly 1 has an accommodation chamber 101 and a communication port 102. The communication port 102 is adjacent to the accommodation chamber 101 and is in communication with the accommodation chamber 101. The connecting member 10 comprises a side wall portion 11, which forms at least part of a peripheral wall of the accommodation chamber 101, and the communication port 102 is located in the side wall portion 11. The connecting member 10 can further comprise a top wall portion and a bottom cover 12, and the side wall portion 11, the top wall portion and the bottom cover 12 define the accommodation chamber 101. At least part of the side wall portion 11 is located between the top wall portion and the bottom cover 12. One of the top wall portion and the bottom cover 12 can be integrated with the side wall portion 11 by injection molding, and the other one of the top wall portion and the bottom cover 12 is sealingly connected to the side wall portion 11. At least part of the valve core 20 is located inside the accommodation chamber 101 and the valve core 20 can be driven to rotate. In a radial direction of the side wall portion 11, at least part of the seal 30 is located between the side wall portion 11 and the valve core 20 for sealing the fluid control assembly 1. Optionally, the fluid control assembly 1 further comprises a driving assembly 50. The driving assembly 50 comprises a driving member. The driving member can comprise a motor or a combination of a motor and a transmission gear set. The driving member is connected to the valve core 20 in transmission way, so that the driving member drives the valve core 20 to rotate.

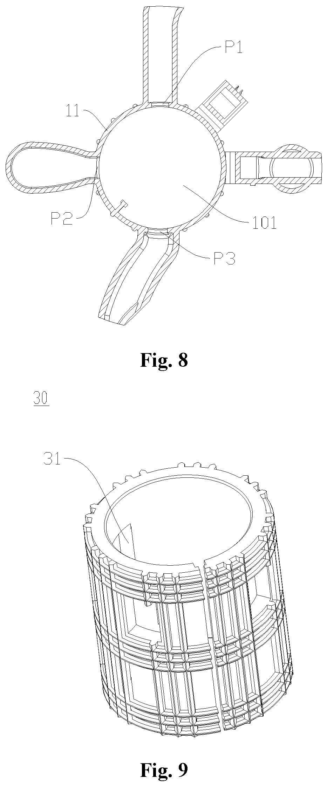

The seal 30 comprises a pore passage 31 that is in communication with the communication port 102. Optionally, the seal 30 comprises pore passages 31, the number of which is the same with that of the communication ports 102, and the pore passages 31 are in communication with the communication ports 102 one-to-one. As shown in Figures 9 to 13, orthographic projections of the pore passages 31 of the seal 30 in an axial direction of the seal 30 are arranged at intervals in a circumferential direction of the valve core 20. The pore passages comprise a first pore passage 32 and a second pore passage 33. The first pore passage 32 and the second pore passage 33 are spaced apart in the axial direction of the seal 30. In that case, the first pore passages 32 and the second pore passages 33 arranged at intervals in the circumferential direction of the valve core 20 are located at different levels of the seal 30, respectively. Compared with the case of arranging all the pore passages at intervals in the circumferential direction of the valve core and arranging all the pore passages at the same level of the seal, with the seal 30 of the flow control device provided by the embodiment of the present application, it is beneficial for increasing a length of a wall portion between the two pore passages 31 located at the same level, so that the valve core 20 can tightly press a wall portion of the seal 30 when rotating, thus improving the sealing performance of the fluid control assembly.

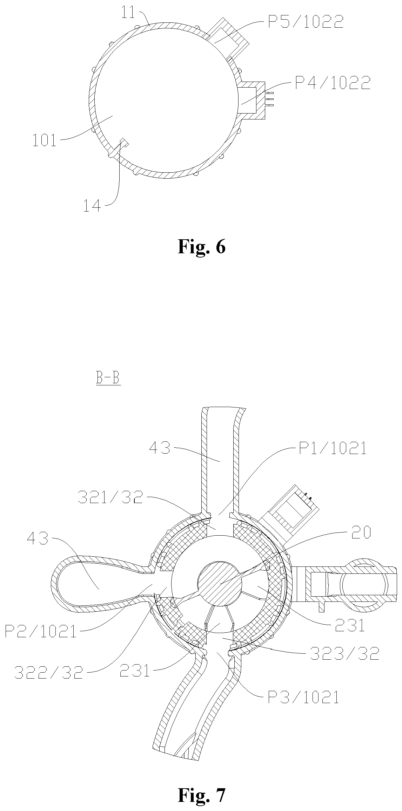

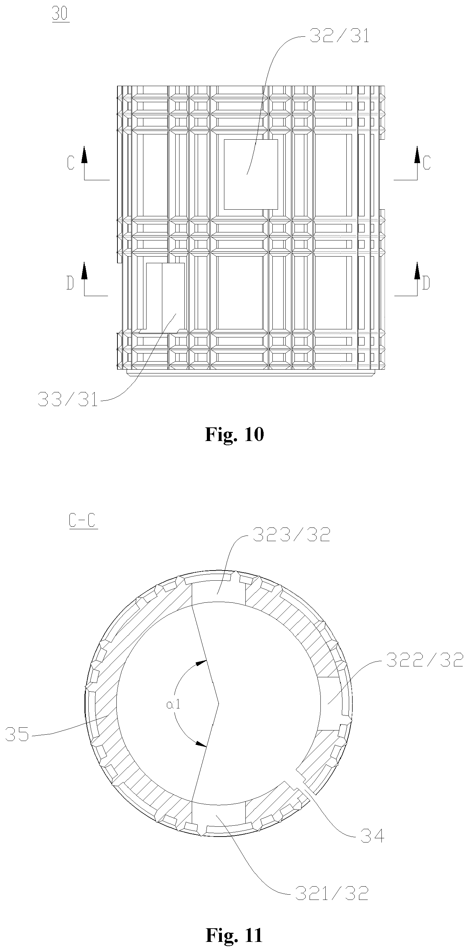

In order to prevent the first seal 30 from rotating, the first seal 30 comprises a first fitting part 34, as shown in Figure 11, and the connecting member 10 comprises a limiting part 14, as shown in Figure 6. The first fitting part 34 is limitedly connected to the limiting part 14. For example, the first fitting part 34 can be one of a hole structure and a protruding structure, and the limiting part 14 can be the other one of a hole structure and a protruding structure, where the protruding structure is inserted into the hole structure for position limiting. The first seal 30 comprises a first circumferential wall portion 35 and a second circumferential wall portion 36. An orthographic projection of the first circumferential wall portion 35 and an orthogonal projection of the second circumferential wall portion 36 in the axial direction of the first seal 30 are arranged in the circumferential direction of the valve core 20. The first circumferential wall portion 35 is located between a first sub-pore passage 321 and a third sub-pore passage 323, and the first circumferential wall portion 35 and the second sub-pore passage 322 are respectively provided on two sides of the first seal 30 in a radial direction. A central angle a1 corresponding to the first circumferential wall portion 35 is greater than 90 degrees and less than 180 degrees. The second circumferential wall portion 36 is located between a fourth sub-pore passage 331 and the fifth sub-pore passage 332. A central angle a2 corresponding to the second circumferential wall portion 36 is greater than 180 degrees.

Further referring to Figures 1 to 8, in some embodiments, the fluid control assembly 1 comprises a flow passage 43 that is in communication with the communication port 102. The fluid control assembly 1 further comprises a first flow passage plate 41. The first flow passage plate 41 forms at least part of a wall portion of the flow passage 43. The first flow passage plate 41 extends from an outer surface of the side wall portion 11 in a direction away from the accommodation chamber 101. The first flow passage plate 41 can be integrated with the connecting member 10 by injection molding. With the above arrangement, a better sealing performance can be achieved between the first flow passage plate 41 and the connecting member 10, and it can easily reduce the number of parts of the fluid control assembly 1 and improve the assembly efficiency of the fluid control assembly 1. Furthermore, the fluid control assembly 1 can further comprise a second flow passage plate 42, which is sealed with the first flow passage plate 41 and forms a wall portion of the flow passage 43. Optionally, the second flow passage plate 42 can be welded to the first flow passage plate 41.

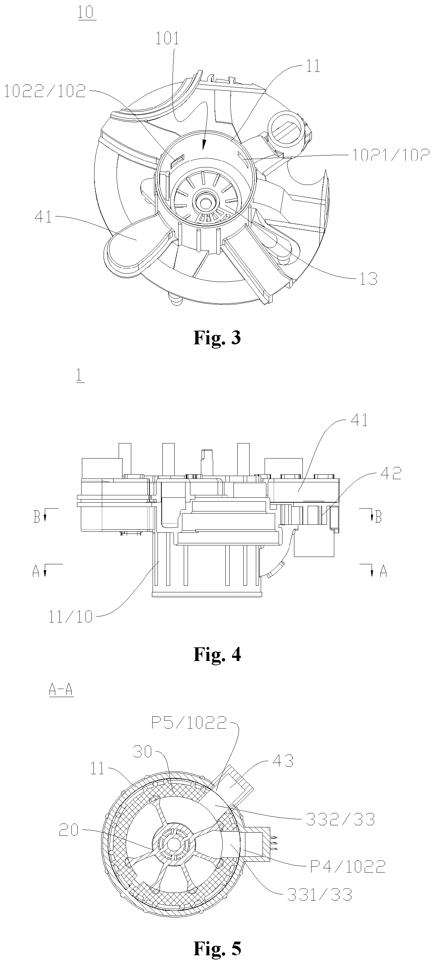

In order to achieve corresponding communication between the communication port 102 and the pore passage 31, as shown in Figures 3 to 8, in some embodiments, orthographic projections of the communication port 102 in the axial direction of the side wall portion 11 are arranged at intervals in the circumferential direction of the valve core 20, and the communication port 102 comprises a first communication port 1021 and a second communication port 1022. The first communication port 1021 and the second communication port 1022 are spaced apart in the axial direction of the side wall portion 11. The first communication port 1021 is in communication with and the first pore passage 32, and the second communication port 1022 is in communication with the second pore passage 33 correspondingly. Optionally, the communication port 102 can comprise three first communication ports 1021 and two second communication ports 1022. The three first communication ports 1021 can be located at one level of the fluid control assembly 1, and the two second communication ports 1022 can be located at another level of the fluid control assembly 1. The orthographic projections of three first communication ports 1021 in the axial direction of the valve core 20 are arranged adjacently, and the orthographic projections of the two second communication ports 1022 in the axial direction of the valve core 20 are arranged adjacently. It can be understood that: in the context, an orthographic projection of each communication port in the axial direction of the side wall portion 11 comprises an area enclosed and defined by an orthographic projection of the wall portion of each communication port in the axial direction of the valve core 20. Herein, the axial direction of the side wall portion 11, the axial direction of the valve core 20 and the axial direction of the seal 30 are parallel or coincident.

As shown in Figures 9 to 13, the pore passage 31 of the seal 30 comprises at least one first pore passage 32 and at least two second pore passages 33. The orthographic projections of all the first pore passages 32 in the axial direction of the seal 30 are adjacent to each other, and the orthographic projections of all the second pore passages 33 in the axial direction of the seal 30 are arranged adjacent to each other. In specific implementation, the pore passage 31 of the seal 30 comprises three first pore passages 32 and two second pore passages 33. The three first pore passages 32 can be located at one level of the seal 30, and the two second pore passages 33 can be located at another level of the seal 30. The orthographic projections of three first pore passages 32 in the axial direction of the seal 30 are arranged adjacently, and the orthographic projections of two second pore passages 33 in the axial direction of the seal 30 are arranged adjacently. In one embodiment, the angle between two adjacent first pore passages 32 can be 90 degrees, and the angle between two adjacent second pore passages 33 can be 45 degrees. In that case, at the level where the first pore passages 32 of the seal 30 are located, almost half of the wall portion are not provided with a pore passage, and at the level where the second pore passages 33 of the seal 30 are located, almost more than half of the wall portion are not provided with a pore passage. Compared with the case of arranging all the pore passages at the same level of the seal, the fluid control assembly provided by the embodiment of the present application can increase the length of wall portion between the two pore passages 31 at the same level so as to improve the sealing performance of fluid control assembly.

During rotation of the valve core 20, due to factors such as the control accuracy of the driving assembly 50 or the signal transmission delay or the rotational inertia of the valve core 20, it is possible that the valve core 20 is stopped before rotating to a set angle or continues to rotate after arriving at the set angle, which will easily cause the valve core 20 to generate a rotation tolerance. For example, the tolerance of rotation angle of the valve core 20 can be ±5 degrees, that is, the valve core 20 can rotate and stop when reaching to a positon before the set angle by 5 degrees or continue to rotate until it stops at a position past the set angle by 5 degrees. Therefore, in order to enable the seal 30 to be always contact with the valve core component 20 in each stroke of the rotation of the valve core 20 so that the seal 30 has better sealing performance, in this embodiment, the first pore passages 32 and the second pore passages 33 are configured to be spaced apart in the axial direction of the first seal 30, and thus a length of the wall portion between the two pore passages 31 located at the same level can be increased, which facilitates the valve core 20 of being always in contact with the wall portion of the first seal 30 within the stroke range, so as to improve the sealing performance of the first seal 30.

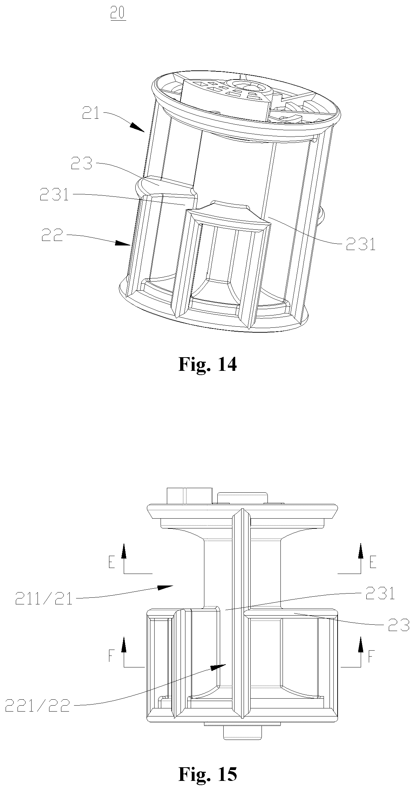

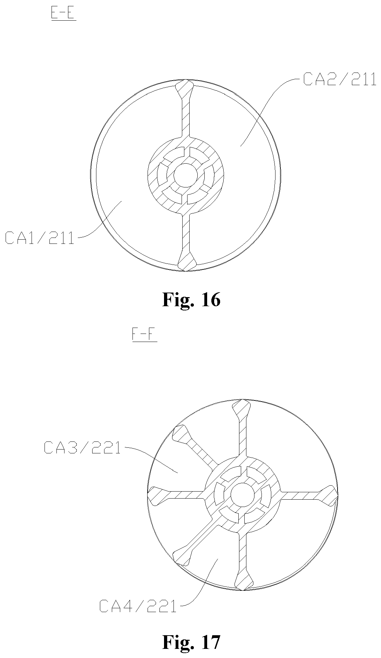

As shown in Figures 14 to 18, in one embodiment, the valve core 20 comprises a first set of chambers 21, a partition plate 23 and a second set of chambers 22. In the axial direction of the valve core 20, the partition plate 23 is located between the first set of chambers 21 and the second set of chambers 22. The first set of chambers 21 comprises at least two first conductive chambers 211 that are partitioned with each other, and the second set of chambers 22 comprises at least two second conductive chambers 221 that are partitioned with each other. The partition plate 23 comprises a through hole 231, a part of the first conductive chambers 211 are correspondingly in communication with a part of the second conductive chambers 221 through the through hole 231. The communication port 102 in communication with the first pore passage 32 is able to be in communication with the communication port 102 in communication with the second pore passage 33 through the first conductive chamber 211, the through hole 231 and the second conductive chamber 221 by rotating the valve core 20. With the above arrangement, the fluid control function of the fluid control assembly can be implemented.

As shown in Figures 3 to 21, the communication port 102 of the fluid control assembly comprises a first communication port 1021 and a second communication port 1022. The first communication port 1021 comprises a first port P1, a second port P2 and a third port P3, and the second communication port 1022 may comprise a fourth port P4 and a fifth port P5. An orthographic projection of the first port P1, an orthographic projection of the second port P2, an orthographic projection of the third port P3, an orthographic projection of the fourth port P4 and an orthographic projection of the fifth port P5 are arranged in sequence in the circumferential direction of the valve core 20. In the figures, the case that the orthographic projections of the above five ports are arranged counterclockwise in the circumferential direction of the valve core 20 will be illustrated as an example. Optionally, the orthographic projections of the first port P1, the second port P2, the third port P3, the fourth port P4 and the fifth port P5 are arranged clockwise in the circumferential direction of the valve core 20. In the axial direction of the side wall portion 11, the first port P1, the second port P2 and the third port P3 are located at one level of the fluid control assembly 1, and the fourth port P4 and the fifth port P5 are located at another level of the fluid control assembly 1. In that case, in the axial direction of the side wall portion 11, the orthographic projection of the wall portion of the fifth port P5 is located between the orthographic projection of the wall portion of the first port P1 and the orthographic projection of the wall portion of the fourth port P4. The first port P1 is in communication with the corresponding first pore passage 32, and the fourth port P4 and the fifth port P5 are in communication with the corresponding second pore passage 33, respectively. One of the first port P1 and the third port P3 can be in communication with the second port P2 through the first conductive chamber 211, and one of the fourth port P4 and the fifth port P5 can be in communication with the first port P1 through the first conductive chamber 211, the through hole 231, the second conductive chamber 221, the corresponding first pore passage 32 and the corresponding second pore passage 33. One of the fourth port P4 and the fifth port P5 can be in communication with the third port P3 through the first conductive chamber 211, the through hole 231, and the second conductive chamber 32, the corresponding first pore passage 32 and the corresponding second pore passage 33. With the above arrangement, various circulation modes of the fluid control assembly can be achieved. In specific implementation, a number of the communication ports 102 of the fluid control assembly can be three, which are, for example, the first port P1, the fourth port P4, and the fifth port P5, respectively. The number of the communication ports 102 can also be four or five, or more, which is not limited in the present application.

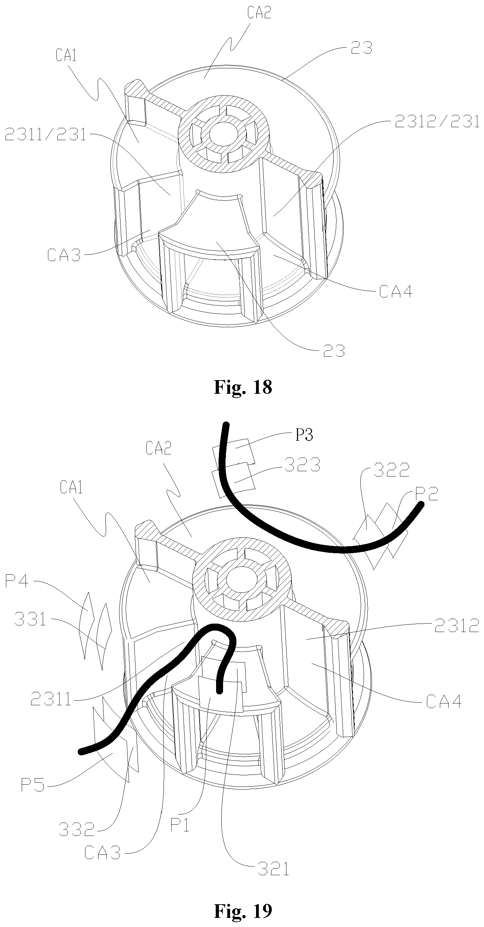

Further referring to Figures 14 to 22, in one embodiment, the first conductive chamber 211 of the valve core 20 comprises a first chamber CA1 and a second chamber CA2 that are partitioned with each other, and the second conductive chamber 221 comprises a third chamber CA3 and a fourth chamber CA4 that are partitioned with each other. The orthographic projection of the third chamber CA3 and the orthographic projection of the fourth chamber CA4 in the axial direction of the valve core 20 are both located inside the orthographic projection of the first chamber CA1. The through hole 231 of the partition plate 23 comprises a first through hole 2311 and a second through hole 2312. The third chamber CA3 is in communication with the first chamber CA1 through the first through hole 2311, and the fourth chamber CA4 is in communication with the first chamber CA1 through the second through hole 2312. As shown in Figures 18 to 21, one of the first port P1 and the third port P3 can be in communication with the second port P2 through the second chamber CA2, and one of the first port P1 and the third port P3 can be in communication with one of the fourth port P4 and the fifth port P5 through the first chamber CA1, the first through hole 2311, the third chamber CA3, the second through hole 2312 and the fourth chamber CA4.

Furthermore, as shown in Figures 9 to 13 and 19 to 22, in some embodiments, the first pore passage 32 of the seal 30 comprises a first sub-pore passage 321, a second sub-pore passage 322 and a third sub-pore passage 323, and the second pore passage 33 comprises a fourth sub-pore passage 331 and a fifth sub-pore passage 332. The first sub-pore passage 321 is in communication with the first port P1, the second sub-pore passage 322 is in communication with the second port P2, the third sub-pore passage 323 is in communication with the third port P3, the fourth sub-pore passage 331 is in communication with the fourth port P4, and the fifth sub-pore passage 332 is in communication with the fifth port P5. The fluid control assembly has at least one of following four operating modes.

As shown in Figure 19, the fluid control assembly is in a first operating mode. The valve core 20 is located at a first position, where the first port P1 is in communication with the fifth port P5 through the first sub-pore passage 321, the first chamber CA1, the first through hole 2311, the third chamber CA3 and the fifth sub-pore passage 332, and the fourth port P4 is in a closed state. The second port P2 is in communication with the third port P3 through the second sub-pore passage 322, the second chamber CA2, and the third sub-pore passage 323. In the context, the position of the valve core 20 refers to a position of the valve core 20 relative to the connecting member 10.

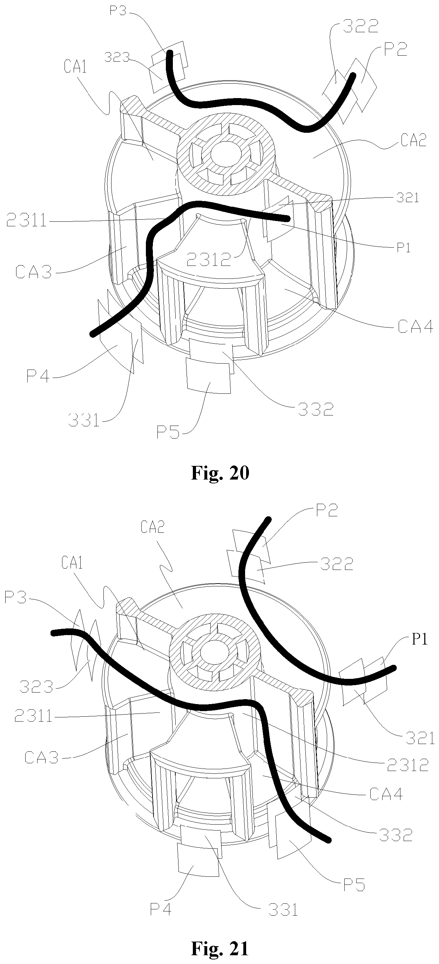

As shown in Figure 20, the fluid control assembly is in a second operating mode. The valve core 20 is located at a second position, where the first port P1 is in communication with the fourth port P4 through the first sub-pore passage 321, the first chamber CA1, the first through hole 2311, the third chamber CA3 and the fourth sub-pore passage 331, and the fifth port P5 is in a closed state. The second port P2 is in communication with the third port P3through the second sub-pore passage 322, the second chamber CA2 and the third sub-pore passage 323.

As shown in Figure 21, the fluid control assembly is in a third operating mode. The valve core 20 is located at a third position, where the third port P3 is in communication with the fifth port P5 through the third sub-pore passage 323, the first chamber CA1, the second through hole 2312, the fourth chamber CA4 and the fifth sub-pore passage 332, and the fourth port P4 is in a closed state. The first port P1 is in communication with the second port P2 through the first sub-pore passage 321, the second chamber CA2 and the second sub-pore passage 322.

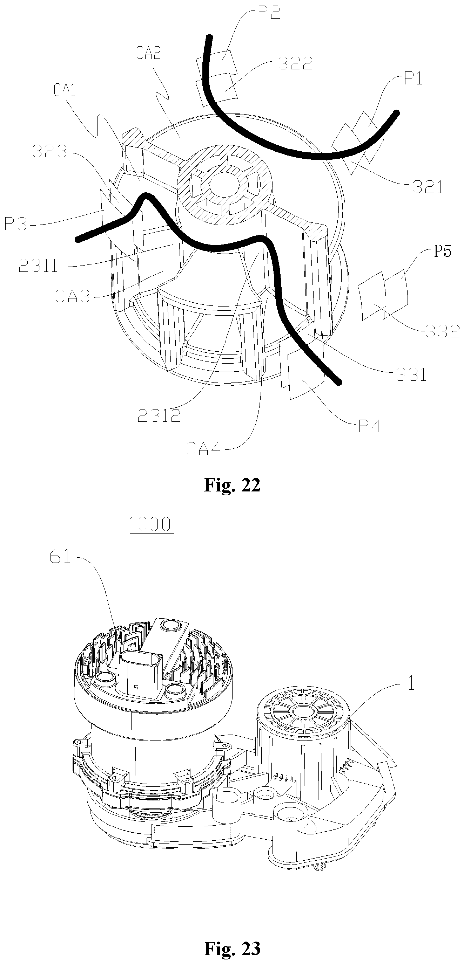

As shown in Figure 22, the fluid control assembly is in a fourth operating mode. The valve core 20 is located at a fourth position, where the third port P3 is in communication with the fourth port P4 through the third sub-pore passage 323, the first chamber CA1, the second through hole 2312, the fourth chamber CA4 and the fourth sub-pore passage 331, and the fifth port P5 is in a closed state. The first port P1 is in communication with the second port P2 through the first sub-pore passage 321, the second chamber CA2 and the second sub-pore passage 322.

With the above arrangement, the fluid control assembly can be provided with communication ports at two levels in the axial direction of the valve core 20, namely the first communication port and the second communication port, and the seal 30 is provided with two pore passages at two levels, namely the first pore passages and the second holes. The valve core 20 is provided with conductive chambers at two levels so as to achieve various communication modes of the communication ports. It can be understood that the fluid control assembly can also be provided with communication ports at three levels in the axial direction of the valve core 20, the seal 30 is provided with pore passages at three levels, and the valve core 20 is provided with communication chambers at three levels so as to achieve various communication modes of the communication ports, which is not limited in the present application.

In summary, the fluid control assembly 1 provided according to the embodiment of the present application comprises a connecting member 10, a valve core 20 and a seal 30. At least part of the seal 30 is sandwiched between the side wall portion 11 of the connecting member 10 and the valve core 20. The seal 30 comprises a pore passage corresponding to the communication port 102, and thus a fluid is able to flow to the communication port through the pore passage. The orthographic projections of the pore passages of the seal 30 in the axial direction of the seal 30 are arranged at intervals in the circumferential direction of the valve core. The pore passages comprise first pore passages 32 and second pore passages 33. The first pore passages 32 and the second pore passages 33 are spaced apart in the axial direction of the seal 30. In that case, the first pore passages 32 and the second pore passages 32 arranged at intervals in the circumferential direction of the valve core 20 are respectively located at different levels of the seal 30. Compared with the case of arranging all the pore passages at intervals in the circumferential direction of the valve core and arranging all the pore passages at the same level of the seal, the seal 30 of the flow control device provided by the embodiment of the present application can easily increase a length of the wall portion between the two pore passages at the same level position, so that the valve core 20 can tightly press the wall portion of the seal 30 when rotating, which can improve the sealing performance of fluid control assembly 1, facilitating promotion and application.

Further referring to Figures 1 to 8, and Figure 22 and Figure 23, an embodiment of the present application also provides a fluid control device 1000. The fluid control device comprises a fluid management component 61 and at least one fluid control assembly 1 provided in any of the above embodiments, where the fluid management component 61 can comprise but is not limited to one of a heat exchanger, an electric pump, and a liquid reservoir or a combination thereof. The fluid control assembly 1 may comprise a first flow passage plate 41 and a second flow passage plate 42. The fluid management component 61 is fixedly connected or limitedly connected with at least one of the first flow passage plate 41 and the second flow passage plate 42, and the first flow passage plate 41 and the second flow passage plate 42 form a flow passage 43 that communicates the fluid management component 61 with the fluid control assembly 1. The fluid control device according to the embodiment of the present application has the same beneficial effects as the fluid control assembly 1 provided by any of the above embodiments, which will not be described again.

Optionally, the fluid control device can further comprise structures such as multiple pipes 62 and multiple temperature sensors. In case that the fluid control assembly 1 comprises the first flow passage plate 41 and the second flow passage plate 42, the fluid management assembly 61, the pipe 62 and the temperature sensor can be connected to at least one of the first flow passage plate 41 and the second flow passage plate 42 and be sealed, which allows the passages in the fluid management assembly 61 and the passages in the pipe 62 to be in communication with the passages 43 in the fluid control assembly 1. With the above arrangement, the pipeline connections between the fluid control assembly 1, the fluid management component 61 and each pipe 62 can be reduced, the degree of integration of the fluid control device can be improved, and the promotion and application can be facilitated.

It should be noted that the above embodiments are only configured to illustrate the present application and do not limit the technical solutions described in the present application. For example, the definition of "front", "back", "left", "right", "up" and "down" and other directions, even though the present application has been described in detail in this specification with reference to the above-mentioned embodiments, those skilled in the art should understand that those skilled in the art can still modify, combine or equate the present application, and all technical solutions and improvements thereof that do not depart from the spirit and scope of the present application shall be covered by the claims of the present application.

## Claims

1. A fluid control assembly, having an accommodation chamber and communication ports, wherein, the fluid control assembly comprises a connecting member, a valve core and a seal, wherein the connecting member comprises a side wall portion, which forms at least part of a peripheral wall of the accommodation chamber, the communication ports are located in the side wall portion, and at least part of the valve core is located in the accommodation chamber, wherein at least part of the seal is located between the side wall portion and the valve core in a radial direction of the accommodation chamber, and the seal comprises pore passages in communication with the communication ports,
wherein orthographic projections of all the pore passages of the seal in an axial direction of the seal are arranged at intervals in a circumferential direction of the valve core, the pore passages comprise a first pore passage and a second pore passage, which are spaced apart in the axial direction of the seal.

2. The fluid control assembly according to claim 1, wherein the pore passages comprise at least one first pore passage and at least two second pore passages, orthographic projections of at least one first pore passage in the axial direction of the seal are arranged to be adjacent to each other, and orthographic projections of all the second pore passages in the axial direction of the seal are arranged to be adjacent to each other.

3. The fluid control assembly according to claim 1, wherein orthographic projections of the communication ports in an axial direction of the side wall portion are arranged at intervals in the circumferential direction of the valve core, the communication ports comprise a first communication port and a second communication port, which are arranged in the axial direction of the valve core, wherein the first communication port is in communication with the first pore passage, and the second communication port is in communication with the second pore passage.

4. The fluid control assembly according to any one of claims 1 to 3, wherein the valve core comprises a first set of chambers, a partition plate and a second set of chambers, and the partition plate is located between the first set of chambers and the second set of chambers in the axial direction of the valve core, wherein the first set of chambers comprises at least two first conductive chambers that are partitioned with each other, the second set of chambers comprises at least two second conductive chambers that are partitioned with each other, the partition plate comprises a through hole, and a part of the first conductive chambers are in communication with a part of the second conductive chambers through the through hole,
wherein the communication port corresponding to the first pore passage is able to be in communication with the communication port corresponding to the second pore passage through the first conductive chambers, the through hole, and the second conductive chambers by rotating the valve core.

5. The fluid control assembly according to claim 4, wherein the communication ports at least comprise a first port, a fourth port and a fifth port, and an orthographic projection of a wall portion of the fifth port in the axial direction of the side wall portion is located between an orthogonal projection of a wall portion of the first port and an orthogonal projection of a wall portion of the fourth port in the axial direction of the side wall portion,
wherein the first port is in communication with the first pore passage, and the fourth port and the fifth port are in communication with a corresponding second pore passage of the second pore passages, respectively,
wherein one of the fourth port and the fifth port is able to be in communication with the first port through the first conductive chamber, the through hole, the second conductive chamber, the first pore passage, and the corresponding second pore passage.

6. The fluid control assembly according to claim 5, wherein the communication ports further comprises a second port and a third port, an orthographic projection of the first port, an orthographic projection of the second port, and an orthographic projection of the third port, an orthographic projection of the fourth port and an orthographic projection of the fifth port in the axial direction of the side wall portion are arranged in the circumferential direction of the valve core in sequence,
wherein the first port, the second port and the third port are located at one level of the fluid control assembly, the fourth port and the fifth port are at another level of the fluid control assembly, one of the first port and the third port is able to be in communication with the second port through the first conductive chamber, and one of the fourth port and the fifth port is able to be in communication with the third port through the first conductive chamber, the through hole, the second conductive chamber, the corresponding first pore passage, and the corresponding second pore passage.

7. The fluid control assembly according to claim 6, wherein the first conductive chamber comprises a first chamber and a second chamber that are partitioned with each other, the second conductive chamber comprises a third chamber and a fourth chamber that are partitioned with each other, and an orthographic projection of the third chamber and an orthographic projection of the fourth chamber in the axial direction of the valve core are both located inside an orthographic projection of the first chamber, wherein the through hole of the partition plate comprises a first through hole and a second through hole, the third chamber is in communication with the first chamber through the first through hole, and the fourth chamber is in communication with the first chamber through the second through hole.

8. The fluid control assembly according to claim 7, wherein the first pore passage comprises a first sub-pore passage, a second sub-pore passage and a third sub-pore passage, and the second pore passage comprises a fourth sub-pore passage and a fifth sub-pore passage, wherein the first sub-pore passage is in communication with the first port, the second sub-pore passage is in communication with the second port, the third sub-pore passage is in communication with the third port, the fourth sub-pore passage is in communication with the fourth port, and the fifth sub-pore passage is in communication with the fifth port,
wherein the fluid control assembly has at least one of following four operating modes:
in a first operating mode, the valve core is located at a first position, the first port is in communication with the fifth port through the first sub-pore passage, the first chamber, the first through hole, the third port and the fifth sub-pore passage, and the second port is in communication with the third port through the second sub-pore passage, the second chamber and the third sub-pore passage;
in a second operating mode, the valve core is located at a second position, the first port is in communication with the fourth port through the first sub-pore passage, the first chamber, the first through hole, the third chamber and the fourth sub-pore passage, and the second port is in communication with the third port through the second sub-pore passage, the second chamber, and the third sub-pore passage;
in a third operating mode, the valve core is located at a third position, the third port is in communication with the fifth port through the third sub-pore passage, the first chamber, the second through hole, the fourth chamber, and the fifth sub-pore passage, and the first port is in communication with the second port through the first sub-pore passage, the second chamber and the second sub-pore passage;
in a fourth operating mode, the valve core is located at a fourth position, the third port is in communication with the fourth port through the third sub-pore passage, the first chamber, the second through hole, the fourth chamber and the fourth sub-pore passage, and the first port is in communication with the second port through the first sub-pore passage, the second chamber and the second sub-pore passage.

9. The fluid control assembly according to any one of claims 1 to 3, and 5 to 8, further comprising a flow passage in communication with the communication ports, wherein the connecting member comprises a first flow passage plate, which forms at least part of a wall portion of the flow passage, the first flow passage plate extends from the side wall portion in a direction away from the accommodation chamber, and the first flow passage plate is integrated with the side wall portion.

10. The fluid control assembly according to claim 9, wherein the connecting member further comprises a second flow passage plate, the second flow passage plate is sealed with the first flow passage plate, and the second flow passage plate forms part of the wall portion of the flow passage.

11. A fluid control device, comprising a fluid management assembly and at least one fluid control assembly according to any one of claims 1 to 10, wherein the fluid control assembly comprises a flow passage, a port of the fluid management assembly is in communication with the flow passage.

12. The fluid control device according to claim 11, wherein the fluid management component comprises one of a heat exchanger, an electric pump, and a liquid reservoir or a combination thereof.

13. The fluid control device according to claim 11, further comprising a plurality of adapter pipes and a plurality of temperature sensors, wherein the fluid control assembly comprises the flow passage, the fluid control assembly comprises a first flow passage plate and a second flow passage plate, the second flow passage plate is sealed with the first flow passage plate, and both the first flow passage plate and the second flow passage plate form part of the wall portion of the flow passage,
wherein the fluid management assembly, the plurality of adapter pipes and the plurality of temperature sensors are all connected to and sealed with at least one of the first flow passage plate and the second flow passage plate, and a passage in the fluid management assembly and a passage in the plurality of adapter pipes are in communication with the flow passage in the fluid control assembly.
